# EUROPÄISCHE PATENTSCHRIFT

(11) **EP 2 221 393 B1**
(45) Veröffentlichungstag und Bekanntmachung des Hinweises auf die Patenterteilung: **12.10.2011**
(21) Anmeldenummer: 10152938.6
(22) Anmeldetag: 08.02.2010
(51) Int. Cl.: C22C 38/00, C22C 38/02, C22C 38/04, C22C 38/44, C22C 38/46, B23K 35/30

(54) **Schweisszusatzwerkstoff auf der Basis von legiertem Stahl**
Welding filler material based on alloyed steel
Matériau d'apport pour soudure basé sur de l'acier allié

(30) Priorität: 19.02.2009 CH 2552009
(43) Veröffentlichungstag der Anmeldung: 25.08.2010
(73) Patentinhaber: Alstom Technology Ltd, 5400 Baden (CH)
(72) Erfinder: Nazmy, Mohamed, 5442 Fislisbach (CH); Gerdes, Paul Claus, 5406 Rütihof (CH); Kuenzler, Andreas, 5400 Baden (CH)

(56) Entgegenhaltungen:
- EP-A- 0 976 844
- EP-A- 1 347 073
- JP-A- 6 306 550

## Beschreibung

### Technisches Gebiet

Die Erfindung bezieht sich auf das Gebiet der Werkstofftechnik. Sie betrifft einen Schweisszusatzwerkstoff auf der Basis von Stahl, welcher sich durch eine verbesserte Schmelzfähigkeit beim Schweissen und eine höhere Zeitstandfestigkeit nach dem Erstarren gegenüber bekannten Schweisszusatzwerkstoffen auszeichnet.

### Stand der Technik

Es ist bekannt, Rotoren von thermischen Strömungsmaschinen, beispielsweise Gasturbinen, aus einzelnen Scheiben herzustellen, die dann miteinander verschweisst werden. Dazu wird beispielsweise von der Anmelderin schon seit Jahrzehnten ein Lichtbogen-Schmelzschweissverfahren/ Unterpulver(UP)schweissverfahren eingesetzt.

Um die Effizienz von Gasturbinen zu erhöhen werden diese u.a. bei extrem hohen Betriebstemperaturen gefahren. Die Rotoren müssen daher einerseits bei sehr hohen Temperaturen eine hohe Zeitstandfestigkeit und anderseits auch gute andere mechanische Eigenschaften sowie auch eine gute Oxidationsbeständigkeit aufweisen. Dies gilt selbstverständlich auch für die Schweissnähte, über welche die Rotorscheiben miteinander verbunden sind.

Aus dem Stand der Technik ist bekannt, für die UP-Schweissung derartiger Gasturbinenrotoren einen Schweisszusatzwerkstoff mit folgender chemischer Zusammensetzung (Angaben in Gew.- %) zu verwenden:
0.09-0.14 C, max. 0.40 Si max. 1.40 Mn, max. 0.025 P, max. 0.020 S, max. 11.00-12.50 Cr, 2.00-2.60 Ni, 0.95-1.80 Mo, 0.20-0.35 V, 0.020-0.055 N, Rest Eisen.

Dieser Schweisszusatzwerkstoff ist unter dem Namen SZW 3001-UP bekannt. Er wird als Draht geliefert, wobei die Zugfestigkeit des Drahtes im Bereich von 700 bis 1200 N/mm² liegt und die zulässige Abweichung der Festigkeit innerhalb einer Charge nicht mehr als +/- 50 N/mm² betragen darf. Dieser Schweisszusatzwerkstoff wird gemäss Lieferbedingungen für UP-Verbindungs- und Auftragsschweissungen verwendet.

Den hohen Anforderungen moderner Gasturbinen, insbesondere hinsichtlich Hochtemperatureigenschaften, wie z. B. der Kriech-/Zeitstandfestigkeit, wird dieses Material jedoch nicht mehr in jedem Falle gerecht.

Aus US 5906791 ist ein Bor- und Seltenerdmetallstahl bekannt, welcher zur Herstellung von Turbinenkomponenten eingesetzt wird. Er weist sehr gute physikalische und thermische Eigenschaften auf, z. B. einen hohen Widerstand gegen Versprödung, Oxidation und Kriechen. Dieser hochlegierte 8-13%-Cr-Stahl enthält neben dem hohen Chromanteil u.a. auch noch 0.001-0.04 Gew.- % B, 0.01-2.00 Gew.- % mindestens eines der Elemente Re sowie Os, Ir, Ru, Rh, Pt, Pa (Edelmetalle der Platingruppe); und ausserdem 0.01-0.50 Gew.- % mindestens eines Seltenerdmetalls, wie z. B. Y, La, C. Um eine gute Zähigkeit des Stahles zu erzielen wird angestrebt, dass dieser Stahl beispielsweise möglichst nicht mehr als 0.01 Gew.- % Si und 0.05 Gew. % Mn enthalten soll, da auf diese Weise die Bildung von Segregationen und zweiten Phasen reduziert wird. Die Seltenerdmetalle bewirken im angegebenen Bereich eine Reduzierung der Alterungsversprödung, einige davon, z.B. La, verringern auch die Bildung von Ausscheidungen. Voraussetzung dafür ist ein niedriges Verunreinigungsniveau. Re und die genannten Metalle der Platingruppe wirken als Mischkristallverfestiger. Letztere verbessern zusätzlich den Oxidationswiderstand, erhöhen aber nachteilig die Materialkosten.

### Darstellung der Erfindung

Ziel der Erfindung ist es, die genannten Nachteile des Standes der Technik zu vermeiden. Der Erfindung liegt die Aufgabe zu Grunde, einen hochtemperaturbeständigen Schweisszusatzwerkstoff auf der Basis von Stahl zu entwickeln, welcher sich durch eine verbesserte Schmelzfähigkeit beim Schweissen und eine höhere Zeitstandfestigkeit nach dem Erstarren gegenüber bekannten Schweisszusatzwerkstoffen auszeichnet.

Erfindungsgemäss wird diese Aufgabe dadurch gelöst, dass der Schweisszusatzwerkstoff auf der Basis von Stahl folgende chemische Zusammensetzung (Angaben in Gew.- %) aufweist:
0.05-0.14 C,
8-13 Cr,
1-2.6 Ni,
0.5-1.9 Mo,
0.5-1.5 Mn,
0.15-0.5 Si,
0.2-0.4 V,
0-0.04 B,
2.1-4.0 Re,
0-0.07 Ta,
0-max. 60 ppm Pd,
Rest Fe und herstellungsbedingte unvermeidbare Verunreinigungen.

Im Vergleich zum bisher bekannten und als Schweisszusatzwerkstoff verwendeten Material SZW 3001 zeichnet sich das erfindungsgemässe Material durch erhöhte Zeitstandfestigkeiten und andere gute relevante mechanische Eigenschaften, sowie eine gute Oxidationsbeständigkeit aus. Dies ist zurückzuführen auf die Kombination der Legierungsbestandteile in den angegebenen Bereichen, insbesondere auf die Zugabe von Re im angegebenen Bereich und auf das zusätzliche Mikrolegieren mit B und Ta.

Re ist ein Element, welches in den angegebenen Mengen von 2.1 bis 4.0, vorzugsweise von 3.0 Gew. %, sehr gut zur Mischkristallverfestigung beiträgt und dadurch zu guten Festigkeitswerten, insbesondere Zeitstandsfestigkeitswerten, führt.

B ist ein Element, welches in den angegebenen Mengen bis max. 0.04, vorzugsweise 0.01 Gew. % die Korngrenzen verfestigt. Es stabilisiert ausserdem auch die Karbide. Höhere Borgehalte sind kritisch, da diese zu unerwünschten Borausscheidungen führen können, welche einen Versprödungseffekt haben. Das Zusammenspiel von Bor mit den anderen Bestandteilen, insbesondere mit Ta (im Bereich von 0.01-0.07 Gew.- %) führt zu guten Festigkeitswerten, insbesondere beim Kriechen.

Der erfindungsgemässe Werkstoff kann bis zu 0.07, bevorzugt 0.01 Gew.- % Ta aufweisen. Ta wirkt als Ausscheidungsverfestiger und erhöht die Hochtemperaturfestigkeit. Werden mehr als 0.07 Gew.- % Ta eingestellt, wird dagegen nachteilig der Oxidationswiderstand verringern.

Cr ist ein karbidbildendes Element, welches im angegebenen Bereich von 8-13 Gew.- %, vorzugsweise 12 Gew.- %, die Oxidationsbeständigkeit erhöht, wobei höhere Werte zu unerwünschten Ausscheidungen führen, die nachteilig eine Versprödung des Materials verursachen.

Si ist ein Element, welches im angegebenen Bereich von 0.15-0.5 Gew.- %, vorzugsweise 0.3-0.5 Gew.- %, insbesondere 0.4 Gew.- %, dafür sorgt, dass der Stahl eine verbesserte Schmelzfähigkeit aufweist. Bei Verwendung des erfindungsgemässen Stahles als Schweisszusatzwerkstoff wird daher das Schweissgut flüssiger und das Schweissen ist einfacher durchführbar. Zusätzlich wird die Oxidationsbeständigkeit erhöht, allerdings wird nachteilig durch die Zugabe von Si die Bildung von unerwünschten spröde machenden Phasen in Stählen verstärkt.

Mn und Ni sind austenitstabilisierende Elemente, welche in den angegebenen Bereichen (1-2.6 Gew.- % Ni und 0.5-1.5 Gew.- % Mn, vorzugsweise 1 Gew.-% Mn) die Zähigkeit des Stahles erhöhen.

Mo und V sind ebenfalls Karbidbildner und wirken sich bei Zugabe in den beanspruchten Bereichen (0.5-1.9 Gew.- % Mo, vorzugsweise 1.7 Gew. -% Mo, 0.2-0.4 Gew.- % V, vorzugsweise 0.35 Gew.- % V) positiv den Oxidationswiderstand aus.

Schliesslich können selbst sehr geringe Mengen an Pd (max. 60 ppm, bevorzugt 50 ppm), dazu beitragen, die Festigkeit zu erhöhen (Pd ist en Mischkristallverfestiger) und die Oxidationsbeständigkeit zu verbessern.

### Kurze Beschreibung der Zeichnungen

In der Zeichnung sind Ausführungsbeispiele der Erfindung dargestellt. Es zeigen:
- Fig. 1: die Streckgrenze und Zugfestigkeit als Balkendiagramme für die untersuchten Legierungen;
- Fig. 2: die Bruchdehnung als Balkendiagramme für die untersuchten Legierungen und
- Fig. 3: die Bruchzeit bei 600°C/160 MPa als Balkendiagramm für die untersuchten Legierungen.

### Wege zur Ausführung der Erfindung

Nachfolgend wird die Erfindung anhand von Ausführungsbeispielen und den Zeichnungen näher erläutert.

Es wurden die aus dem Stand der Technik bekannte kommerzielle Legierung SZW 3001 und die Versuchslegierungen SZWX1, SZWX2 und SZWX3 untersucht, deren chemische Zusammensetzung in Gew.- % in Tabelle 1 angegeben ist.

**Tabelle 1: Chemische Zusammensetzung der untersuchten Legierungen**

| | Fe | Cr | Ni | Mn | Si | C | Mo | V | B | Re | Ta | Pd |
|---|---|---|---|---|---|---|---|---|---|---|---|---|
| SZW 3001 | Rest | 12 | 2.3 | 1 | 0.4 | 0.12 | 1.7 | 0.35 | - | - | 0 | 0 |
| BZW X1 | Rest | 12 | 2.3 | 1 | 0.4 | 0.12 | 1.7 | 0.35 | 0.01 | - | 0.01 | 0 |
| SZW X2 | Rest | 12 | 1 | 1 | 0.4 | 0.12 | 1.7 | 0.35 | 0.01 | 3 | 0.01 | 0 |
| SZW X3 | Rest | 12 | 2.3 | 1 | 0.4 | 0.12 | 1.7 | 0.35 | - | 3 | 0.01 | 50 ppm |

Die erfindungsgemässen Legierungen wurden folgendermassen hergestellt: Sie wurden als Blöcke mit ca. 50 mm Durchmesser in einem Lichtbogenofen mehrere Male geschmolzen. Anschliessend wurden sie einer Spannungsarmglühung (610 °C/6 h/ Ofenabkühlung) unterzogen. Danach wurden übliche Zug- und Zeitstandproben daraus hergestellt.

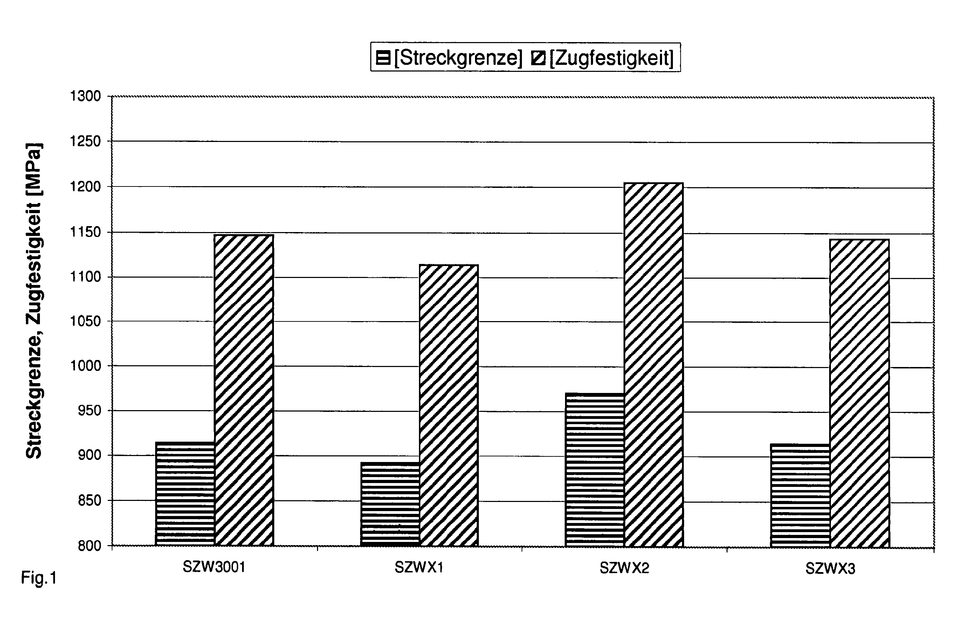

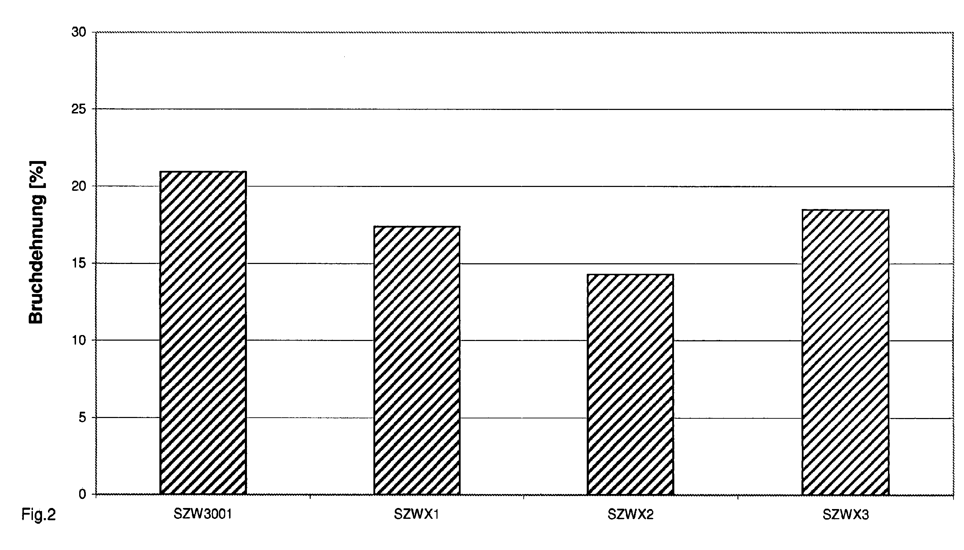

In Fig. 1 und Fig. 2 sind für die vier verschiedenen untersuchten Materialien die Ergebnisse der Zugversuche bei Raumtemperatur dargestellt.
Fig. 1 zeigt jeweils die Streckgrenze (waagerechte Schraffur) und Zugfestigkeit (diagonal Schraffur) als Balkendiagramme. Es ist deutlich erkennbar, dass die erfindungsgemässe Legierung SZWX2 gegenüber dem bisher benutzten Schweisszusatzwerkstoff SZW 3001 stark verbesserte Festigkeitswerte aufweist. Die Streckgrenze ist z. B. von 914 auf 970 MPa (Erhöhung um ca. 6 %) und die Zugfestigkeit von 1147 auf 1205 MPa (Erhöhung um ca. 5 %) gestiegen. Dies ist zurückzuführen auf das Zusammenspiel der gesamten Legierungselemente im angegebenen Bereich, vor allem aber auf Zugabe von Re, B und Ta. Die untersuchte Legierung SZWX3 weist gemäss Fig. 1 gegenüber der Vergleichslegierung unveränderte Festigkeitswerte auf, obwohl die Zusammensetzung bezüglich Re-, Ta und Pd-Gehalt stark differiert.
Fig. 2 zeigt die ermittelten Bruchdehnungswerte. Hier gibt es zwar erwartungsgemäss geringfügige Verschlechterungen der Bruchdehnungswerte, insbesondere die Legierung SZWX2 betreffend, gegenüber dem bekannten Stand der Technik, aber diese machen sich beim vorgesehenen Einsatzzweck des erfindungsgemässen Materials (Schweisszusatzwerkstoff beim Schweissen von Rotoren) nicht gravierend bemerkbar.

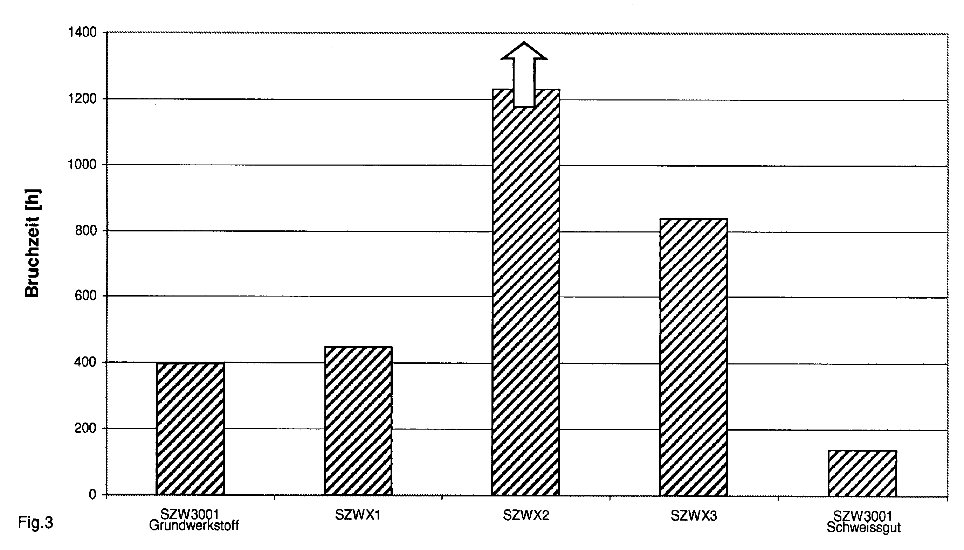

Fig. 3 zeigt das Zeitstandverhalten. Hier ist die Bruchzeit bei 600°C unter einer Belastung von 160 MPa als Balkendiagramm für die untersuchten Materialien dargestellt. Alle untersuchten Legierungen haben vorteilhaft wesentlich bessere Zeitstandfestigkeiten als die aus dem Stand der Technik bekannte SZW 3001. Am deutlichsten ist dieser Vorteil bei der Legierung SZWX2 ausgeprägt. Selbst nach über 1200 Stunden ist die Probe aus diesem Material noch nicht gebrochen, wie durch den Pfeil in Fig. 3 verdeutlicht wird.

Diese sehr guten Eigenschaften werden durch die angegebenen Kombinationen der verschiedenen Legierungselemente erzielt. Insbesondere die Legierung SZWX2 weist eine herausragende Eigenschaftskombination auf, die zum grossen Teil darauf zurückzuführen ist, dass diese Legierung neben den Bestandteilen des aus dem Stand der Technik bekannten Schweisszusatzwerkstoffes SZW 3001 zusätzlich einerseits noch 3 Gew.- % Re und andererseits 0.01 Ge. -% B enthält. Das Rhenium wirkt hier als ein sehr guter Mischkristallverfestiger, während Bor die Karbide stabilisiert und ihre Vergröberung reduziert. Beide Mechanismen verbessern die Zeitstandfestigkeit des Schweissgutes.

Alle untersuchten Materialien zeichnen sich durch eine sehr gute Schmelzfähigkeit aus. Bei Verwendung des erfindungsgemässen Stahles als Schweisszusatzwerkstoff wird daher das Schweissgut flüssiger und das Schweissen ist einfacher durchführbar. Zusätzlich ist vorteilhaft eine erhöhte Oxidationsbeständigkeit vorhanden. Daher wird der erfindungsgemässe Werkstoff bevorzugt zum Schweissen von Gasturbinenrotoren eingesetzt.

Selbstverständlich ist die Erfindung nicht auf die beschriebenen Ausführungsbeispiele beschränkt.

## Patentansprüche

1. Schweisszusatzwerkstoff auf der Basis von Stahl, der folgende chemische Zusammensetzung (Angaben in Gew.- %) aufweist:
0.05-0.14 C,
8-13 Cr,
1-2.6 Ni,
0.5-1.9 Mo,
0.5-1.5 Mn,
0.15-0.5 Si,
0.2-0.4 V,
0-0.04 B,
2.1-4.0 Re,
0-0.07 Ta,
0-max. 60 ppm Pd,
Rest Fe und herstellungsbedingte unvermeidbare Verunreinigungen.

2. Schweisszusatzwerkstoff nach Anspruch 1, **dadurch gekennzeichnet, dass** er 0.10-0.14 Gew. -% C aufweist.

3. Schweisszusatzwerkstoff nach Anspruch 2, **dadurch gekennzeichnet, dass** er 0.12 Gew. -% C aufweist.

4. Schweisszusatzwerkstoff nach einem der Ansprüche 1 bis 3, **dadurch gekennzeichnet, dass** er 12 Gew. % Cr aufweist.

5. Schweisszusatzwerkstoff nach einem der Ansprüche 1 bis 4, **dadurch gekennzeichnet, dass** er 1-2.3 Gew.- % Ni aufweist.

6. Schweisszusatzwerkstoff nach einem der Ansprüche 1 bis 5, **dadurch gekennzeichnet, dass** er 1 Gew.- % Mn aufweist.

7. Schweisszusatzwerkstoff nach einem der Ansprüche 1 bis 6, **dadurch gekennzeichnet, dass** er 0.3-0.5 Gew. -% Si aufweist

8. Schweisszusatzwerkstoff nach Anspruch 7, **dadurch gekennzeichnet, dass** er 0.4 Gew. -% Si aufweist.

9. Schweisszusatzwerkstoff nach einem der Ansprüche 1 bis 8, **dadurch gekennzeichnet, dass** er 1.7 Gew.- % Mo aufweist.

10. Schweisszusatzwerkstoff nach einem der Ansprüche 1 bis 9, **dadurch gekennzeichnet, dass** er 3.0 Gew.- % Re aufweist.

11. Schweisszusatzwerkstoff nach einem der Ansprüche 1 bis 10, **dadurch gekennzeichnet, dass** er 0.005-0.02 Gew.- % B aufweist.

12. Schweisszusatzwerkstoff nach Anspruch 11, **dadurch gekennzeichnet, dass** er 0.01 Gew. -% B aufweist.

13. Schweisszusatzwerkstoff nach einem der Ansprüche 1 bis 12, **dadurch gekennzeichnet, dass** er 50 ppm Pd aufweist.

14. Schweisszusatzwerkstoff nach einem der Ansprüche 1 bis 13, **dadurch gekennzeichnet, dass** er 0.35 Gew. -% V aufweist.

15. Schweisszusatzwerkstoff nach einem der Ansprüche 1 bis 14, **dadurch gekennzeichnet, dass** er 0.01 Gew. -% Ta aufweist.

16. Schweisszusatzwerkstoff nach einem der Ansprüche 1 bis 15, **dadurch gekennzeichnet, dass** er zum Schweissen von Gasturbinenrotoren verwendet wird.

## Claims

1. Steel-based welding additive material having the following chemical composition (amounts in % by weight):
0.05-0.14 C,
8-13 Cr,
1-2.6 Ni,
0.5-1.9 Mo,
0.5-1.5 Mn,
0.15-0.5 Si,
0.2-0.4 V,
0-0.04 B,
2.1-4.0 Re,
0-0.07 Ta,
0-max. 60 ppm Pd,
remainder Fe and unavoidable impurities.

2. Welding additive material according to Claim 1, **characterized in that** it comprises 0.10-0.14% by weight C.

3. Welding additive material according to Claim 2, **characterized in that** it comprises 0.12% by weight C.

4. Welding additive material according to one of Claims 1 to 3, **characterized in that** it comprises 12% by weight Cr.

5. Welding additive material according to one of Claims 1 to 4, **characterized in that** it comprises 1-2.3% by weight Ni.

6. Welding additive material according to one of Claims 1 to 5, **characterized in that** it comprises 1% by weight Mn.

7. Welding additive material according to one of Claims 1 to 6, **characterized in that** it comprises 0.3-0.5% by weight Si.

8. Welding additive material according to Claim 7, **characterized in that** it comprises 0.4% by weight Si.

9. Welding additive material according to one of Claims 1 to 8, **characterized in that** it comprises 1.7% by weight Mo.

10. Welding additive material according to one of Claims 1 to 9, **characterized in that** it comprises 3.0% by weight Re.

11. Welding additive material according to one of Claims 1 to 10, **characterized in that** it comprises 0.005-0.02% by weight B.

12. Welding additive material according to Claim 11, **characterized in that** it comprises 0.01% by weight B.

13. Welding additive material according to one of Claims 1 to 12, **characterized in that** it comprises 50 ppm Pd.

14. Welding additive material according to one of Claims 1 to 13, **characterized in that** it comprises 0.35% by weight V.

15. Welding additive material according to one of Claims 1 to 14, **characterized in that** it comprises 0.01% by weight Ta.

16. Welding additive material according to one of Claims 1 to 15, **characterized in that** it is used for welding gas turbine rotors.

## Revendications

1. Matériau d'apport de soudage à base d'acier, qui présente la composition chimique suivante (% on poids):
0, 05 - 0,14 C
8 - 13 Cr
1 - 2,6 Ni
0,5 - 1,9 Mo
0,5 - 1,5 Mn
0,15 - 0,5 Si
0, 2 - 0,4 V
0 - 0,04 B
2,1 - 4,0 Re
0 - 0,07 Ta
0 - max. 60 ppm Pd
le reste étant du fer et des impuretés de fabrication inévitables.

2. Matériau d'apport de soudage selon la revendication 1, **caractérisé en ce qu'**il présente 0,10 - 0,14 % en poids de C.

3. Matériau d'apport de soudage selon la revendication 2, **caractérisé en ce qu'**il présente 0,12 % en poids de C.

4. Matériau d'apport de soudage selon l'une quelconque des revendications 1 à 3, **caractérisé en ce qu'**il présente 12 % en poids de Cr.

5. Matériau d'apport de soudage selon l'une quelconque des revendications 1 à 4, **caractérisé en ce qu'**il présente 1 - 2,3 % en poids de Ni.

6. Matériau d'apport de soudage selon l'une quelconque des revendications 1 à 5, **caractérisé en ce qu'**il présente 1 % en poids de Mn.

7. Matériau d'apport de soudage selon l'une quelconque des revendications 1 à 6, **caractérisé en ce qu'**il présente 0,3 - 0,5 % en poids de Si.

8. Matériau d'apport de soudage selon la revendication 7, **caractérisé en ce qu'**il présente 0,4 % en poids de Si.

9. Matériau d'apport de soudage selon l'une quelconque des revendications 1 à 8, **caractérisé en ce qu'**il présente 1,7 % en poids de Mo.

10. Matériau d'apport de soudage selon l'une quelconque des revendications 1 à 9, **caractérisé en ce qu'**il présente 3,0 % en poids de Re.

11. Matériau d'apport de soudage selon l'une quelconque des revendications 1 à 10, **caractérisé en ce qu'**il présente 0,005 - 0,02 % en poids de B.

12. Matériau d'apport de soudage selon la revendication 11, **caractérisé en ce qu'**il présente 0,01 % en poids de B.

13. Matériau d'apport de soudage selon l'une quelconque des revendications 1 à 12, **caractérisé en ce qu'**il présente 50 ppm de Pd.

14. Matériau d'apport de soudage selon l'une quelconque des revendications 1 à 13, **caractérisé en ce qu'**il présente 0,35 % en poids de V.

15. Matériau d'apport de soudage selon l'une quelconque des revendications 1 à 14, **caractérisé en ce qu'**il présente 0,01 % en poids de Ta.

16. Matériau d'apport de soudage selon l'une quelconque des revendications 1 à 15, **caractérisé en ce qu'**il est utilisé pour le soudage de rotors de turbines à gaz.
